# EUROPEAN PATENT APPLICATION

(11) **EP 2 543 950 A2**
(43) Date of publication of application: **09.01.2013**
(21) Application number: 12175628.2
(22) Date of filing: 09.07.2012
(51) Int. Cl.: F28D 20/02, F28F 3/02, F28F 3/12

(54) **Phase change material heat sink**

(30) Priority: 08.07.2011 US 201113178981
(71) Applicant: Hamilton Sundstrand Space Systems International, Inc., Windsor Locks, CT 06096 (US)
(72) Inventor: Quinn, Gregory, Windsor, CT 06095 (US); Stieber, Jesse Joseph, Waterbury, CT 06096 (US)
(74) Representative: Tomlinson, Kerry John

(57) **Abstract**

A phase change material heat sink (200,300) includes a sealed enclosure (206,302) containing a phase change material (120). A fluid passage element (201,304) is in contact with the sealed enclosure and includes a thermal exchange layer (222,322) in thermal contact with the top of the enclosure and that directs fluid in a first flow direction (A) and a shunt passage element (202,306) in thermal contact with at least one of the sides or the bottom of the enclosure and that directs fluid in a second flow direction (B).

## Description

### FIELD OF INVENTION

The subject matter disclosed herein relates generally to the field of heat sinks and, in particular, to phase change material heat sinks.

### DESCRIPTION OF RELATED ART

Phase change material (PCM) heat sinks utilize PCM's such as water, wax, or other materials with desirable melting points to store and release heat energy associated with the solid-liquid phase change. The energy associated with such a change is generally referred to as the latent heat of fusion. One type of PCM heat sink uses a heat transport fluid to carry thermal energy into and out of the heat sink. The fluid flows through a fluid passage element that brings the fluid into thermal contact with the PCM to allow heat transfer to occur while keeping the fluid isolated from the PCM.

### BRIEF SUMMARY

According to one embodiment, a phase change material heat sink includes a sealed enclosure containing a phase change material and that includes a top, a bottom and sides. The phase change material heat sink of this embodiment further includes a fluid passage element in contact with the sealed enclosure that includes a thermal exchange layer in thermal contact with the top and that directs fluid in a first flow direction and a shunt passage element in thermal contact with at least one of the sides or the bottom and that directs fluid in a second flow direction. In this embodiment, the fluid passage element is configured to direct the fluid through the shunt passage element before it is directed to the thermal exchange layer.

According to another embodiment, a phase change material heat sink includes a sealed enclosure containing a phase change material and including a top, a bottom and sides. The phase change material heat sink of this embodiment also includes a fluid passage element in contact with the sealed enclosure, the fluid passage element including a thermal exchange layer in thermal contact with the top and that directs fluid in a first flow direction and a shunt passage element passing between the top and bottom that directs fluid in a second flow direction. In this embodiment, the fluid passage element is configured to direct the fluid through the shunt passage element before it is directed to the thermal exchange layer.

According to yet another embodiment a phase change material heat sink includes a sealed enclosure containing a phase change material and including outer walls. The phase change material heat sink of this embodiment also includes a fluid passage element in contact with the outer walls, the fluid passage element including a thermal exchange layer in thermal contact with one side of the outer walls that directs fluid in a first flow direction and a shunt passage element in thermal contact with another side of the outer walls that directs fluid in a second flow direction. In this embodiment, the fluid passage element is configured to direct the fluid through the shunt passage element before it is directed to the thermal exchange layer.

Other aspects, features, and techniques of the invention will become more apparent from the following description taken in conjunction with the drawings.

### BRIEF DESCRIPTION OF THE SEVERAL VIEWS OF THE DRAWINGS

Referring now to the drawings wherein like elements are numbered alike in the several FIGURES:

FIG. 1 is an exploded view of a phase change material heat sink according to the prior art to illustrate shortcomings thereof recognized and solved, or reduced, by embodiments of the present invention;

FIG. 2 is an exploded view of the a phase change material heat sink according to one embodiment of the present invention; and

FIG. 3 is an exploded view of a phase change material heat sink according to another embodiment of the present invention.

### DETAILED DESCRIPTION

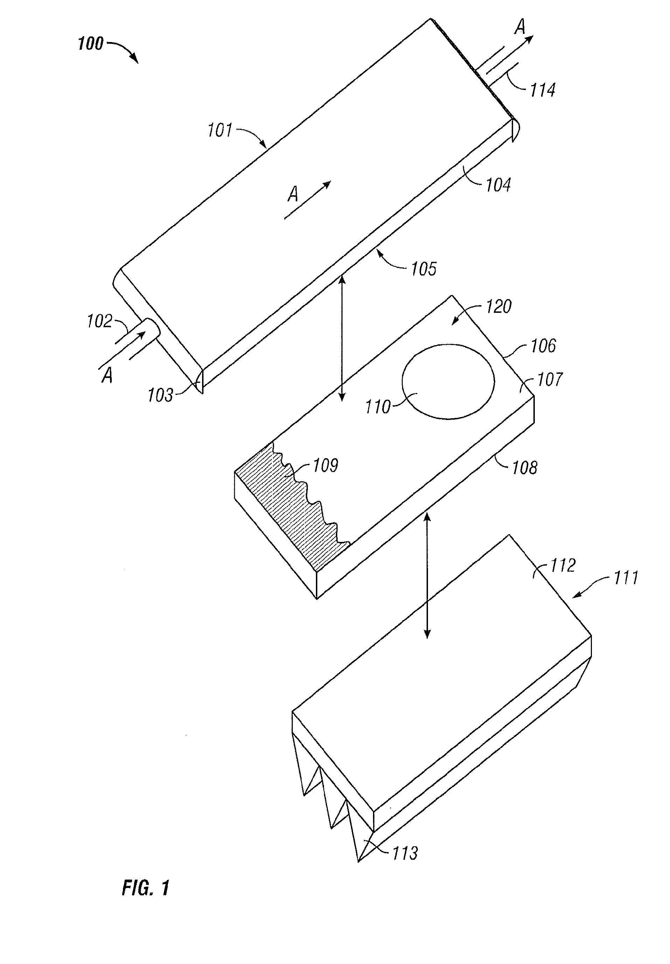

FIG. 1 illustrates a prior art PCM heat sink 100 in an exploded view. The PCM heat sink 100 includes a sealed PCM containing chamber 106. This sealed chamber 106 includes a PCM material 120 such as water or wax sealed therein. The sealed chamber 106 includes a top 107 and a bottom 108. In FIG. 1, the sealed chamber 106 is illustrated such that the PCM material 120 is visible. However, it shall be understood that in practice, the top 107 is formed of solid material and that the PCM material 120 may not be not visible.

The PCM heat sink 100 also includes a fluid passage element 101. A heat transmission fluid (e.g., Freon or water, for example) enters an end 103 of the fluid passage element 101 via inlet passage (e.g., pipe) 102 and exits it via outlet passage 114. The fluid generally traverses the fluid passage element 102 in the direction shown by arrow A. The fluid passage element 101 illustrated in FIG. 1 includes a connector portion 104 arranged between the ends 103 through which the fluid passes while traversing from the inlet passage 102 to the outlet passage 114. The connector portion 104 in particular, and the fluid passage element 101 generally, includes a bottom 105. When the PCM heat sink 100 is assembled, the top 107 of the sealed chamber 106 is in thermal contact with the bottom 105 of the fluid passage element 101.

The PCM heat sink 100 also optionally includes a heat release element 111. As illustrated, the heat release element 111 includes heat diffusion fins 113 and a top 112. In some cases, the heat release element 111 can be brought into thermal contact with the sealed chamber 106 to dissipate heat stored therein. For example, in the context of a satellite, heat may be stored in the sealed chamber 106 until the satellite is not in line-of-sight with the sun. At that time, the bottom 108 of the sealed chamber 106 can be brought into contact with the top 112 of the heat release element 111 and the heat can be released via fins 113 into space.

A problematic aspect of a PCM heat sink such as that illustrated in FIG. 1 is that phase change materials expand or contract during phase changes. Expansion due to phase changes can create significant pressure increases within the sealed enclosure 106. To further explain the prior solutions and the shortcomings thereof, the top 107 of the sealed enclosure 106 is illustrated as being transparent and containing a PCM 120. To provide room for thermal expansion, a void space 110 may be left within the enclosure 106 to account for the volume change. In some cases, however, the liquid state (e.g., expanded) PCM can be physically blocked by solid PCM from reaching the void space 110. For example, assuming that fluid is flowing in direction A in FIG. 1, the PCM 120 changes to a liquid phase in a liquid region 109. This liquid region 109 is not in contact with the void 110. As such, the pressure in the liquid region 109 will increase.

The prior art has proposed several different solutions to the above problem. One is to utilize a movable accumulator to account for the volume change. Another approach is to contain the pressure within a structure that can withstand the forces that develop. Yet another approach is to immobilize the PCM in a substrate, such as a fiber or foam structure. When the PCM is immobilized, the void spaces become evenly distributed within the chamber 106 so that there is no volume change on the macroscopic scale. This eliminates the high pressures that can develop within the chamber 106. However, such an approach adds complexity to the manufacturing approach and, also, limits processing that can be performed on the enclosure 106 itself.

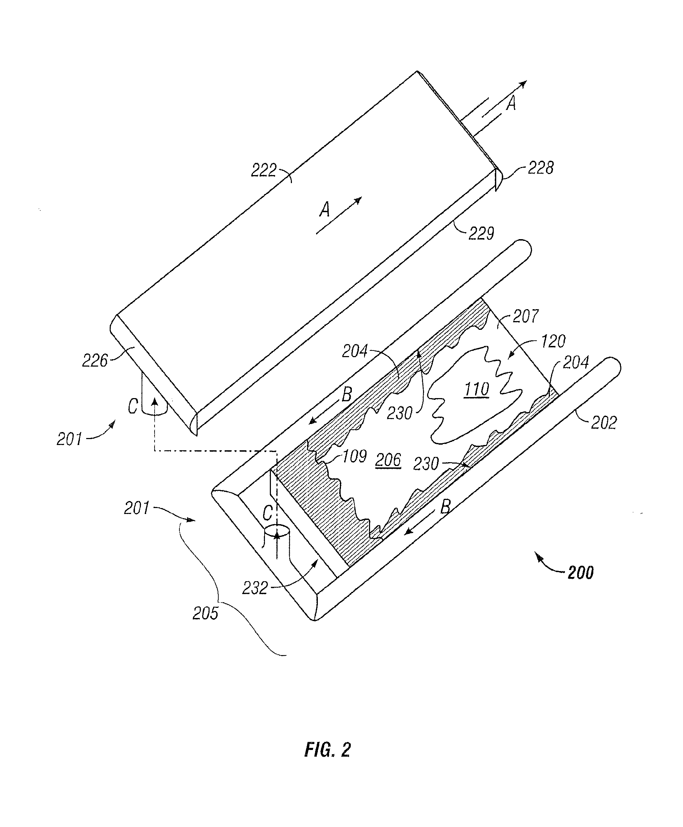

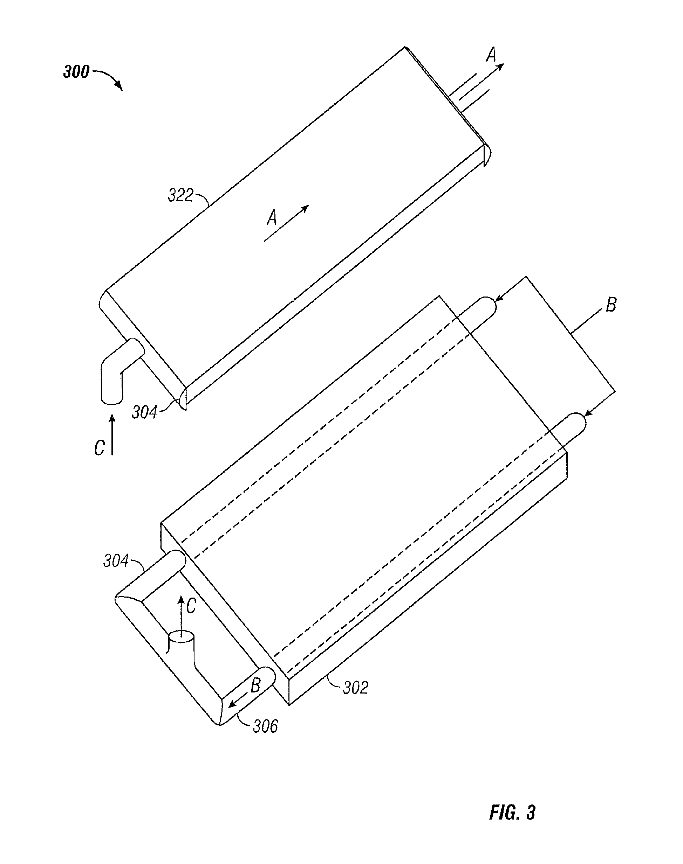

FIG. 2 illustrates a PCM heat sink 200 according to one embodiment of the present invention. In this embodiment, the heat sink 200 includes sealed enclosure 206 that can be the same as or similar to the sealed enclosure 106 that is illustrated in FIG. 1. The sealed enclosure 206 is formed at least partially of metal in one embodiment and can optionally be brazed. While not illustrated, it shall be understood that the embodiments shown in FIGs. 2 and 3 can both include a heat release element as is generally described above but it is not required.

As illustrated, the sealed enclosure 206 includes a PCM 120 and is formed such that a void space 110 exists therein. In FIG. 2, the top 207 of the sealed enclosure 206 is shown as being clear but it will be realized that this is for explanation only. The exact configuration of the sealed enclosure 206 can vary from that illustrated in FIG. 2. For example, the sealed enclosure 206 could be circular in shape or could take on any other geometric shape. As illustrated, the sealed enclosure 206 includes sides 230. It shall be understood that the sealed chamber 206 can include one or more internally located fins formed of foam or metal that extend inwardly from the sides 230 or top 207 thereof into the PCM material 120.

In this embodiment, the PCM heat sink 200 also includes a fluid passage element 201. The fluid passage element 201 includes a thermal exchange layer 222 and one or more shunt passage elements 202. Generally, the thermal exchange layer 222 directs fluid from a first end 226 to a second end 228. As the fluid passes through the fluid passage element 201, a bottom side 229 thereof allows heat to be transferred between the fluid and the top 207 of the sealed enclosure 206 to transfer heat to/from the liquid from/to the PCM 120.

In contrast to the prior art, the fluid passage element 201 causes fluid to be directed in a first direction (arrow A) and a second direction (shown by arrow B) that is different from the first direction. In one embodiment, the first and second directions represent counter-flow directions. In a particular embodiment, the first and second directions are anti-parallel to one another. The counter-flow arrangement, as explained further below, causes shunt passages 204 of liquid PCM to be created in the PCM to allow liquid phase PCM 109 to reach and flow into the void space 110 regardless of the location of the void space 110.

In one embodiment, the shunt passage elements 202 (e.g, pipes) are in thermal contact with the sides 230 of the enclosure 206. In one embodiment, the shunt passage elements 202 could be repositioned to contact a bottom 232 of the enclosure 206. A fluid is received into the fluid passage elements 202 that is travelling in the direction B. The heat of that fluid causes shunt passages 204 of liquid PCM to form in the PCM.

As illustrated, two shunt passage elements 202 are provided. Of course, any number of shunt passage elements greater than or equal to one could be included. Regardless, the fluid passing through the shunt passage elements 202 is collected in and redirected at an end 205 of the shunt passage elements 202. At end 205, the fluid is transferred into the first end 226 of the thermal exchange layer 222 and then travels in direction A towards the second end 228 of the thermal exchange layer 222. Generally, the change of direction is shown by linking direction C where the fluid flow direction translates from direction B to direction A but, as one of ordinary skill will realize, other end configurations and direction reversal mechanisms could be employed than those illustrated in FIG. 2.

FIG. 3 illustrates another embodiment of a PCM heat sink 300. This embodiment includes a sealed PCM enclosure 302 configured for thermal contact with a fluid passage element 304 that includes a thermal transfer layer 322 and shunt passage elements 306. The flows of a fluid through thermal transfer layer 322 and shunt passage elements 306 are counter to one another as described above with respect to FIG. 2. In this embodiment, rather than passing along the sides of the sealed enclosure 302, shunt passage elements 306 pass through the sealed enclosure 302. The fluid traveling in direction B thereby melts PCM in the enclosure 302 that surrounds them to provide passages between a liquid portion of the PCM and a void space regardless of the location of the void space.

It shall be understood that, while not illustrated, the sealed enclosure 302 could be cylindrical in shape. In such a case, the shunt passage elements 306 can be located on an external wall of the cylinder and the thermal transfer layer 322 can be located on an internal wall of the cylinder or vice versa. Operation of such an embodiment can be the same or similar to that as described above.

The technical effects and benefits of exemplary embodiments include providing a mechanism to create fluid expansion channels in a PCM heat sink to reduce or eliminate harmful effects of thermal expansion.

The terminology used herein is for the purpose of describing particular embodiments only and is not intended to be limiting of the invention. While the description of the present invention has been presented for purposes of illustration and description, it is not intended to be exhaustive or limited to the invention in the form disclosed. Many modifications, variations, alterations, substitutions, or equivalent arrangement not hereto described will be apparent to those of ordinary skill in the art without departing from the scope of the invention, which is defined by the claims. Additionally, while various embodiment of the invention have been described, it is to be understood that aspects of the invention may include only some of the described embodiments. Accordingly, the invention is not to be seen as limited by the foregoing description, but is only limited by the scope of the appended claims.

## Claims

1. A phase change material heat sink (200,300) comprising:
a sealed enclosure (206,302) containing a phase change material (120) and including outer walls (207,232,230); and
a fluid passage element (201,304) in contact with the sealed enclosure, the fluid passage element including a thermal exchange layer (222,322) in thermal contact with one side of the outer walls that directs fluid in a first flow direction (A) and a shunt passage element (202,306) in thermal contact with another side of the outer walls or passing between the outer walls through the enclosure that directs fluid in a second flow direction (B), wherein the fluid passage element is configured to direct the fluid through the shunt passage element before it is directed to the thermal exchange layer.

2. The phase change material heat sink of claim 1 wherein the outer walls
include a top (207), a bottom (232) and sides (230), and the
shunt passage element (202) is in thermal contact with at least one of the sides or the bottom.

3. The phase change material heat sink of claim 2, wherein the shunt passage element (202) includes a first element and a second element, the first element being in contact with a first of the sides (230) and the second element being in contact with a second of the sides (230).

4. The phase change material heat sink of claim 2 or 3, wherein the shunt passage element (202) is in thermal contact with at least one of the sides (230) and further comprising:
a heat release element (111) in thermal contact with the bottom (232) or the sides (230) of the sealed enclosure (206).

5. The phase change material heat sink of claim 1 wherein the outer walls include
a top (207), a bottom (232) and sides (230), and the
shunt passage element (306) passes between the top and bottom.

6. The phase change material heat sink of claim 5, further comprising:
a heat release element (111) in thermal contact with the bottom of the sealed enclosure (302).

7. The phase change material heat sink of any preceding claim, wherein the sealed enclosure (206,302) is formed at least partially of metal.

8. The phase change material heat sink of claim 7, wherein the sealed enclosure (206,302) is formed of brazed metal.

9. The phase change material heat sink of any preceding claim, wherein the phase change material (120) is wax.

10. The phase change material heat sink of any preceding claim, wherein the first flow direction (A) is anti-parallel to the second direction (B).

11. A method of operating a phase change material heat sink (200,300), comprising:
providing a sealed enclosure (206,302) containing a phase change material (120) having generally end regions and side regions (204), a top surface (207) extending thereacross and a void space (110);
thermally contacting the top surface (207) with a thermal exchange layer (222,322) comprising a fluid passage;
thermally contacting a side region (204) with a shunt passage element (202,306);
passing a fluid to be cooled through the shunt passage element in a direction (B) so as to melt a portion of the phase change material in a said side region (204) and thereafter directing the fluid to the fluid passage of the thermal exchange layer;
and directing the fluid through the thermal exchange layer (222,322) in a different direction (A) from one end region to another end region thereby to melt phase change material;
whereby molten phase change material (120) in the side region (204) enables the void space (110) to accommodate expansion of phase change material in the end region (109).
